# EUROPÄISCHE PATENTANMELDUNG

(11) **EP 0 797 030 A1**
(43) Veröffentlichungstag der Anmeldung: **24.09.1997**
(21) Anmeldenummer: 97890050.4
(22) Anmeldetag: 18.03.1997
(51) Int. Cl.: F16J 15/18

(54) **Kolbenstangendurchführung für einen Hydraulikzylinder**

(30) Priorität: 19.03.1996 AT 507/96
(71) Anmelder: Hainzl Industriesysteme GmbH & Co KG, 4020 Linz (AT)
(72) Erfinder: Zajicek, Ernst, Ing., 4100 Ottensheim (AT)
(74) Vertreter: Hübscher, Heiner, Dipl.-Ing.

(57) **Zusammenfassung**

Es wird eine Kolbenstangendurchführung für einen Hydraulikzylinder (4) mit einer Stopfbuchse beschrieben die eine in einen Packungsraum (7) zwischen dem Zylinderkopf (3) und der Kolbenstange (6) eingesetzte, die Kolbenstange (6) umschließende und über einen als Stufenkolben (10) mit einer gegenüber der stirnseitigen Packungsfläche größeren Beaufschlagungsfläche (13) ausgebildeten Druckring hydraulisch beaufschlagbare Packung (8) aufweist. Um vorteilhafte Konstruktionsverhältnisse zu schaffen, wird vorgeschlagen, daß der als Stufenkolben (10) ausgebildete Druckring ausschließlich über den Hydraulikdruck im Zylinder (4) beaufschlagbar ist.

## Beschreibung

Die Erfindung bezieht sich auf eine Kolbenstangendurchführung für einen Hydraulikzylinder mit einer Stopfbuchse, die eine in einen Packungsraum zwischen dem Zylinderkopf und der Kolbenstange eingesetzte, die Kolbenstange umschließende und über einen als Stufenkolben mit einer gegenüber der stirnseitigen Packungsfläche größeren Beaufschlagungsfläche ausgebildeten Druckring hydraulisch beaufschlagbare Packung aufweist.

Bei Stopfbuchsen wird das radiale Anpressen der aus einzelnen Packungsringen zusammengsetzten Packung an die Kolbenstange oder Welle durch ein Anziehen der die Packung axial beaufschlagenden Stopfbuchsenbrille bewirkt. Um eine vom Verschleiß der Packungsringe unabhängige Stopfbuchse zu erhalten, ist es bekannt, die Packung über entsprechend dimensionierte Federn axial vorzuspannen, so daß das bei einem radialen Verschleiß der Packungsringe erforderliche axiale Nachstellen der Stopfbuchsenbrille über die Federn selbständig erfolgt. Während bei außenliegenden Federn die Schwierigkeit auftritt, diese Federn in nicht störender Weise anzuordnen, besteht bei innenliegenden Federn eine erhebliche Korrosionsgefahr durch das Hydraulikmittel. Außerdem ist die Federkraft vom Federweg und damit von der jeweiligen Nachstellung abhängig, was zu einer auf den größten zulässigen Verschleiß der Packung abgestimmten Federvorspannung und damit zu einer unnötig hohen Belastung der noch nicht bzw. nur einem geringen Verschleiß unterworfenen Packung führt. Dies gilt auch für innenliegende Federn, die an der Packung über einen im Druckraum eines Zylinders angeordneten Druckring abgestützt sind, so daß die axiale Gesamtbeaufschlagung der Packung einerseits von der Federkraft und anderseits vom Hydraulikdruck im Zylinder abhängt.

Schließlich ist es bekannt (DD 265 945 A1, GB 2 006 889 A), den Druckring zur Beaufschlagung der Packung als Stufenkolben auszubilden, der eine gegenüber der stirnseitigen Packungsfläche größere Beaufschlagungsfläche aufweist. Da dieser Druckring über eine Druckleitung beaufschlagt wird, wird die Packung mit einer gleichbleibenden Kraft belastet, die auf den maximalen Betriebsdruck des Zylinders ausgelegt sein muß und daher einen entsprechend hohen Packungsverschleiß bedingt.

Der Erfindung liegt somit die Aufgabe zugrunde eine Kolbenstangendurchführung für einen Hydraulikzylinder der eingangs geschilderten Art mit einfachen konstruktiven Mitteln so auszubilden, daß unabhängig vom jeweiligen Verschleiß der Packungsringe eine auf den jeweiligen Hydraulikdruck im Zylinder abgestimmte Beaufschlagung der Packung sichergestellt werden kann.

Die Erfindung löst die gestellte Aufgabe dadurch, daß der als Stufenkolben ausgebildete Druckring ausschließlich über den Hydraulikdruck im Zylinder beaufschlagbar ist.
Durch die Beaufschlagung des Druckringes ausschließlich über den Hydraulikdruck im Zylinder wird unter der Voraussetzung, daß der Druckring als Stufenkolben mit einer gegenüber der stirnseitigen Packungsfläche entsprechend größeren Beaufschlagungsfläche ausgebildet ist, eine bei allen Betriebsdrücken ausreichende axiale Belastung der Packung sichergestellt, um die Kolbenstangendurchführung durch den Zylinderkopf gegenüber dem Hydraulikmittel abzudichten, ohne eine den Verschleiß der Packungsringe fördernde. unnötig hohe Axialspannung aufbringen zu müssen. Da außerdem für die Druckringbeaufschlagung über den Hydraulikdruck des Zylinders keine aufwendigen konstruktiven Maßnahmen erforderlich werden, ergibt sich eine betriebssichere, wartungsfreie Abdichtung der Kolbenstangendurchführung, und zwar bei hohen Standzeiten, weil eben die Packung stets nur in Abhängigkeit vom jeweiligen Betriebsdruck im Zylinder und nicht in Abhängigkeit von einem zu erwartenden Verschleiß der Packung axial beaufschlagt wird.

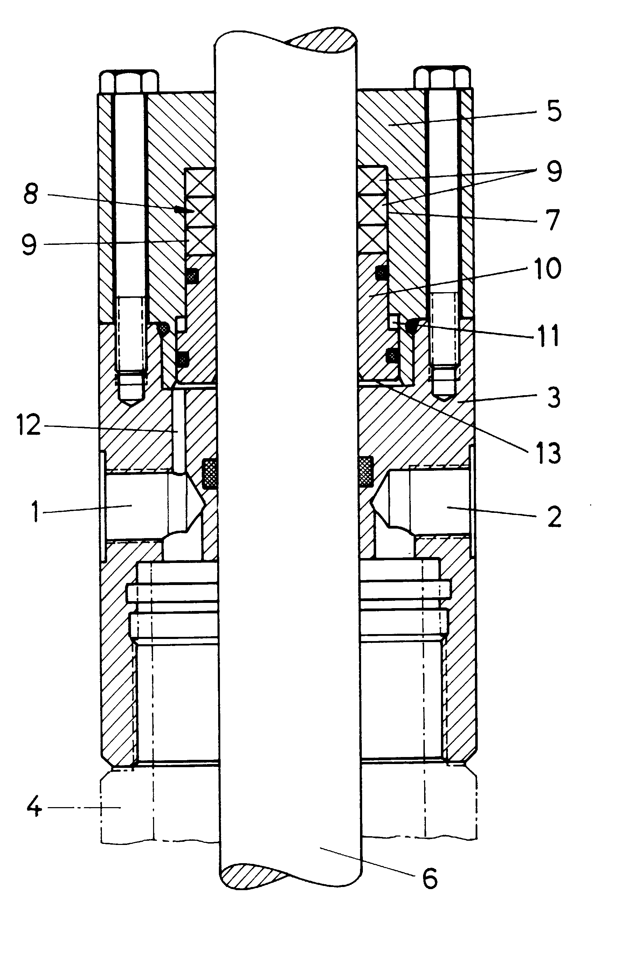

In der Zeichnung ist der Erfindungsgegenstand beispielsweise dargestellt. Es wird eine erfindungsgemäße Stopfbuchse zur Abdichtung der Kolbenstangendurchführung durch einen Zylinderkopf in einem vereinfachten Axialschnitt gezeigt.

Der mit einem Druckleitungsanschluß 1 und einem Entlüftungsanschluß 2 versehene Kopf 3 eines nur strichpunktiert angedeuteten Zylinders 4 weist einen mit dem Kopf 3 verschraubten Deckel 5 auf, der den die Kolbenstange 6 umschließenden, ringförmigen Packungsraum 7 einer Stopfbuchse bildet. Die Packung 8 dieser Stopfbuchse setzt sich in üblicher Weise aus einzelnen Packungsringen 9 zusammen, zwischen denen Zwischenringe für eine Leckageabfuhr oder eine Schmiermittelzufuhr angeordnet sein können. Diese Packung 8 wird über einen Stufenkolben 10 beaufschlagt, der in den gegen den Kopf 3 hin mit einer stufenartigen Erweiterung 11 versehenen Packungsraum 7 als Zylinderraum eingesetzt ist. Da dieser Zylinderraum über eine Durchtrittsbohrung 12 mit dem Druckleitungsanschluß 1 verbunden ist, wirkt der Hydraulikdruck im Zylinder 4 auch auf den Stufenkolben 10, dessen Beaufschlagungsfläche 13 aufgrund der Erweiterung 11 des Packungsraumes 7 größer als die stirnseitige Ringfläche der Packung 8 ist, so daß die Packung 8 über den Stufenkolben 10 mit einem entsprechenden, vom jeweilgen Betriebsdruck des Zylinders 4 abhängigen Druck axial belastet wird, der eine radiale Anpressung der Packungsringe 9 an die Kolbenstange 6 und damit deren Abdichtung gegenüber dem Hydraulikmittel zur Folge hat, wobei der Forderung nach einem mit dem Betriebsdruck im Zylinder 4 steigenden Anpreßdruck vorteilhaft nachgekommen werden kann.

Es braucht wohl nicht besonders nervorgehoben zu werden, daß die Erfindung nicht auf das dargestellt Ausführungsbeispiel beschränkt ist, da es lediglich auf die Beaufschlagung der Packung 8 der Stopfbuchse durch den Hydraulikdruck im Zylinder 4 über einen Stufenkolben 10 geeigneter Größe und nicht auf jeweilge konstruktive Ausführungsformen ankommt.

## Patentansprüche

1. Kolbenstangendurchführung für einen Hydraulikzylinder (4) mit einer Stopfbuchse, die eine in einen Packungsraum (7) zwischen dem Zylinderkopf (3) und der Kolbenstange (6) eingesetzte, die Kolbenstange (6) umschließende und über einen als Stufenkolben (10) mit einer gegenüber der stirnseitigen Packungsfläche größeren Beaufschlagungsfläche (13) ausgebildeten Druckring hydraulisch beaufschlagbare Packung (8) aufweist, dadurch gekennzeichnet, daß der als Stufenkolben (10) ausgebildete Druckring ausschließlich über den Hydraulikdruck im Zylinder (4) beaufschlagbar ist.
